# EUROPEAN PATENT APPLICATION

(11) **EP 4 258 428 A1**
(43) Date of publication of application: **11.10.2023**
(21) Application number: 21942740.8
(22) Date of filing: 22.11.2021
(51) Int. Cl.: H01M 50/103

(54) **BATTERY CASING AND LITHIUM BATTERY**

(30) Priority: 26.05.2021 CN 202121145687 U
(71) Applicant: Eve Energy Co., Ltd., Huizhou, Guangdong 516006 (CN)
(72) Inventor: LIU, Liangliang, Huizhou, Guangdong 516006 (CN); ZHU, Yuan, Guangzhou, Guangdong 516006 (CN); LIU, Rongjiang, Guangzhou, Guangdong 516006 (CN)
(74) Representative: Cabinet Beaumont
(86) International application number: PCT/CN2021/132101
(87) International publication number: WO 2022/247177

(57) **Abstract**

The present application discloses a battery casing and a lithium battery. The battery casing includes a casing, a housing bottom, and a housing cover. The housing is a cylindrical structure which has openings at two ends, the housing is formed by bending and welding plates, the plates are provided with first side edges and second side edges which are welded and connected, and the first side edges and second side edges are provided with a positioning structure. The housing bottom is welded to a first end of the housing, and the housing bottom is configured to seal the first end of the housing. The housing cover is welded to a second end of the housing, and the housing cover is configured to seal the second end of the housing distant from the housing bottom

## Description

The present application claims priority to Chinese Patent Application No. 202121145687.X, filed with the China National Intellectual Property Administration (CNIPA) on May 26, 2021, the disclosure of which is incorporated herein by reference in its entirety.

### TECHNICAL FIELD

The present application relates to the technical field of lithium ion batteries, for example, a battery casing and a lithium battery including the battery casing.

### BACKGROUND

A battery casing of a lithium battery is generally processed and formed in a stamping manner. In order to reduce the cost of the raw material of the battery casing, the battery casing is mostly made of stainless steel. However, the tensile property of the stainless steel material is poor, and the casing stamping depth is greatly limited. When the battery casing is relatively complex in shape, the use of the stainless steel material might increase the difficulty of stamping the battery casing, and the battery casing might be manufactured from materials with high tensile properties for instead, which greatly increases the manufacturing cost of the lithium battery. The square lithium battery cell in the existing art has a high utilization rate in a thickness direction, and the utilization rate of two ends of the lithium battery is relatively low under the requirements of the positive and negative electrode lead-out and the internal space demand, meanwhile, the battery cell might expand on a side where the side area of the coiled core is large when the battery cell is charged or discharged, therefore there is a risk of bulging of the battery during subsequent use.

### SUMMARY

The present application provides a battery casing which might has lower processing and assembling difficulties.

The present application further provides a lithium battery which might has a high space utilization rate and a low manufacturing cost.

An embodiment provides a battery casing. The battery casing includes a housing, a housing bottom and a housing cover. The housing is a tubular structure with two open ends. The housing is configured to be formed by bending and welding of a sheet material. The sheet material has a first side edge and a second side edge which are welded, and the first side edge and the second side edge are provided with positioning structures. The housing bottom is welded to a first end of the housing. The housing bottom is configured to seal and block the first end of the housing. The housing cover is welded to a second end of the housing. The housing cover is configured to seal and block the second end of the housing facing away from the housing bottom.

An embodiment provides a lithium battery. The lithium battery includes the battery casing described above and a battery cell. The battery cell is located within the housing of the battery casing.

### BRIEF DESCRIPTION OF DRAWINGS

FIG. 1 is a front sectional view of a battery casing according to an embodiment of the present application.
FIG. 2 is a front sectional view of a battery casing according to an embodiment of the present application.
FIG. 3 is a top partial sectional view of a battery casing according to an embodiment of the present application.
FIG. 4 is a front sectional view of a battery casing according to an embodiment of the present application.
FIG. 5 is a schematic top view of a housing according to an embodiment of the present application.
FIG. 6 is a schematic top view of a housing according to an embodiment of the present application.
FIG. 7 is a schematic top view of a housing casing according to an embodiment of the present application.
FIG. 8 is a schematic view of the assembly of a lithium battery according to an embodiment of the present application.
FIG. 9 is a front sectional view of a lithium battery according to an embodiment of the present application.
FIG. 10 is a top sectional view of a lithium battery according to an embodiment of the present application.
FIG. 11 is a partial enlarged schematic view of part A of FIG. 1.
FIG. 12 is a partial enlarged schematic view of part B of FIG. 2.
FIG. 13 is a partial enlarged schematic view of part C of FIG. 3.
FIG. 14 is a partial enlarged schematic view of part D of FIG. 9.

### Reference list

- 100: first cell body
- 200: second cell body
- 300: cell electrode tab
- 1: housing
- 11: first side edge
- 12: second side edge
- 101: protrusion
- 102: bump
- 103: through hole
- 104: first accommodation portion
- 105: second accommodation portion
- 106: groove
- 110: first segment
- 120: second segment
- 2: housing bottom
- 201: bottom plate
- 2011: step surface
- 202: surrounding wall
- 3: housing cover
- 301: liquid injection hole
- 4: cover cap
- 5: blocking member
- 6: insulating member
- 7: connecting piece
- 701: positive electrode piece
- 702: negative electrode piece

### DETAILED DESCRIPTION

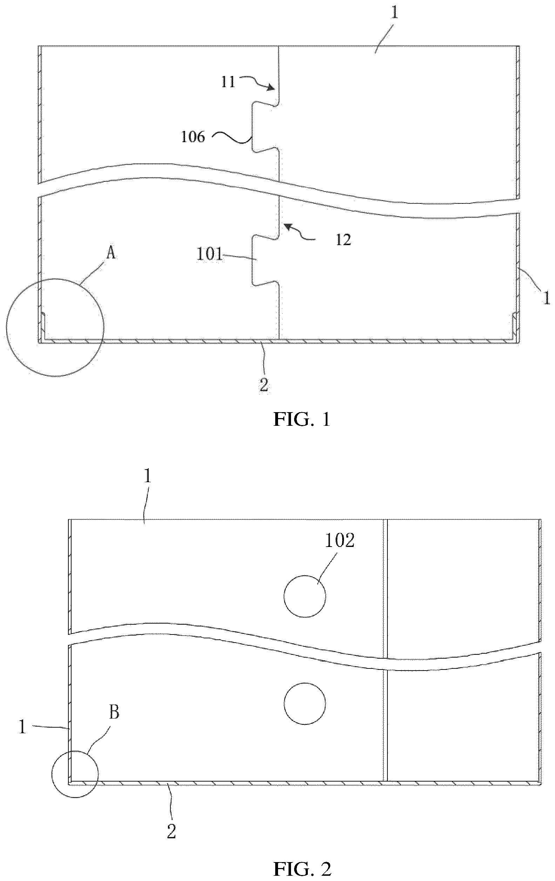

As shown in FIGS. 1 to 5 and FIG. 9, the present application provides a battery casing. The battery casing includes a housing 1, a housing bottom 2 and a housing cover 3. The housing 1 is a tubular structure with two open ends and is configured to be formed by bending and welding of a sheet material. The sheet material has a first side edge 11 and a second side edge 12 which are welded, and the first side edge 11 and the second side edge 12 are provided with positioning structures for assisting welding. The housing bottom 2 is welded to a first end of the housing 1. and the housing bottom 2 is configured to seal and block the first end of the housing 1. The housing cover 3 is welded to a second end of the housing 1. The housing cover 3 is configured to seal and block the second end of the housing 1 facing away from the housing bottom 2. The housing 1 is manufactured in a manner of bending and forming of the sheet material. In this manner, the deformation quantity of the sheet material might be reduced, the defects such as cracks of the sheet material might be avoided, and the manufacturing difficulty of the housing 1 might be reduced. The positioning structures are provided for pre-fixing the sheet material before the sheet material bent in place is welded, the welding difficulty of the sheet material is reduced while the manufacturing precision of the housing 1 might be ensured.

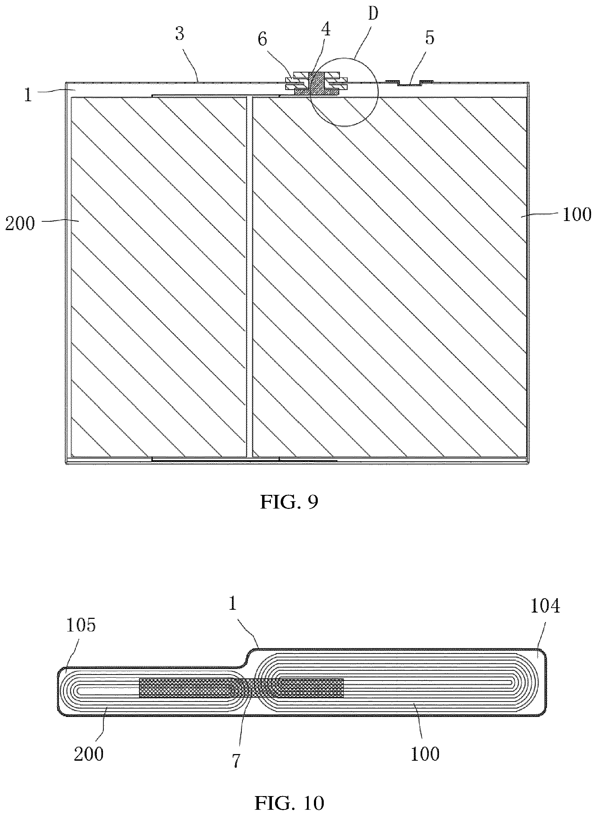

Referring to FIG. 9, the present application further provides a lithium battery. The lithium battery includes the battery casing mentioned in the above embodiments and a battery cell. The battery cell is located within the housing 1. The lithium battery has a simple structure, which is easily produced by the automated industry. When the usage space for the lithium battery is limited, a sectional shape of the lithium battery might be designed to adapt the usage space according to actual needs, and the space utilization rate of the lithium battery might be improved. In addition, the housing 1 is manufactured in a bending manner. In this manner, the manufacturing difficulty of the lithium battery might be reduced, and the strength and the reliability of the lithium battery might be ensured.

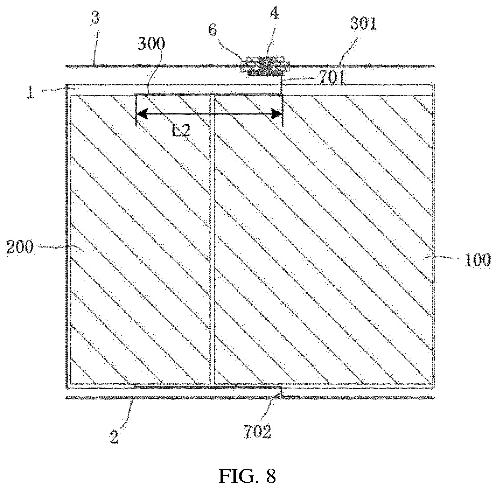

Referring to FIGS. 8 to 10, the present application further provides a method for assembling a lithium battery. The method is applied to manufacture the lithium battery described above and includes the steps described below.

Bending the sheet material, aligning the first side edge 11 of the sheet material and the second side edge 12 of the sheet material through the positioning structures, and welding the sheet material to form the housing 1. Placing the battery cell into the housing 1. Connecting a negative electrode tab of the battery cell to the housing bottom 2, and connecting a positive electrode tab of the battery cell to a cover cap 4 of the housing cover 3. Welding the housing cover 3 and the housing bottom 2 to the housing 1, and injecting an electrolyte solution into the battery casing.

The housing 1 is formed by welding the sheet material, and the battery cell is placed into the housing 1. In this manner, the manufacturing difficulty of the housing 1 might be reduced, and meanwhile, the heat generated by welding might be prevented from transferring to the battery cell, and the impact of the welding of the battery casing on the performance of the battery cell might be reduced.

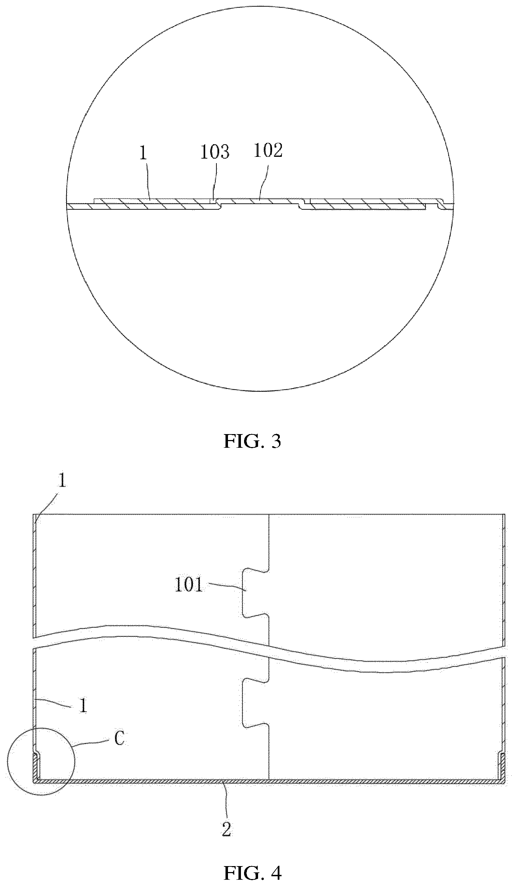

Referring to FIGS. 1 and 4, in an embodiment, the first side edge 11 of the sheet material is provided with a groove 106. A width of a groove bottom of the groove 106 is greater than a width of a groove opening of the groove 106. The second side edge 12 of the sheet material is provided with a protrusion 101 that conforms to a shape of the groove 106. When the first side edge 11 and the second side edge 12 are brought into contact, the protrusion 101 is inserted into the groove 106 to achieve the pre-fixing before being welded of the sheet material and reduce the welding difficulty of the sheet material. The groove 106 and the protrusion 101 are simple in structure and are convenient to be machined. In this manner, the manufacturing difficulty of the housing 1 might be reduced. In addition, the groove 106 and the protrusion 101 are fit. In this manner, a wall thickness of each part of the housing 1 might be basically consistent, the space occupied by the housing 1 might be reduced, and the utilization rate of space within the housing might be improved. At this time, the groove 106 and the protrusion 101 are positioning mechanisms of the battery casing.

In this embodiment, a single sheet material is bent to reduce a number of welding times of the sheet material, the number of bending times of the sheet-like sheet material is at least four, and a position where the first side edge 11 and the second side edge 12 are connected is located on a side surface of the housing 1, which not only might reduce the welding difficulty of the sheet material, but also might reduce the difficulty of sharpening a welding line after welding. In this manner, the welding efficiency might be improved. Of course, the position where the first side edge 11 and the second side edge 12 are connected might also located at a corner position of the housing 1. At this time, the protrusion 101 needs to be bent in order to ensure that the protrusion 101 might be inserted into the groove 106. At this time, the number of bending times of the sheet-like sheet material is at least three, which might reduce the number of bending times of the sheet material.

Referring to FIGS. 2 and 3, in an embodiment, a through hole 103 is disposed at a position adjacent to the first side edge 11 on the sheet material, and a bump 102 is disposed at a position adjacent to the second side edge 12 on the sheet material. After the sheet material is bent in place, the bump 102 is inserted into the through hole 103 to achieve the pre-fixing of the sheet material. At this time, the first side edge 11 of the sheet material is lap joint on an outer side wall of the sheet material, and the second side edge 12 of the sheet material is lap joint on an inner side wall of the sheet material. That is, the housing 1 has a region where the sheet material overlaps, and the first side edge 11 of the sheet material is welded to the outer side wall of the sheet material. The bump 102 and the through hole 103 are fit to pre-fix the sheet material. In this manner, the connecting strength of the pre-fixing of the sheet material might be improved, the displacement of the first side edge 11 relative to the second side edge 12 during welding might be avoided, and the manufacturing precision of the housing 1 might be improved. At this time, the through hole 103 and the bump 102 are positioning mechanisms of the battery casing.

In this embodiment, a rivet might also be disposed at a position adjacent to the second side edge 12 on the sheet material, after the sheet material is bent in place, the rivet is inserted into the through hole 103, and the rivet is riveted to achieve the pre-fixing of the sheet material, which might increase the connection stability of the pre-fixing of the sheet material.

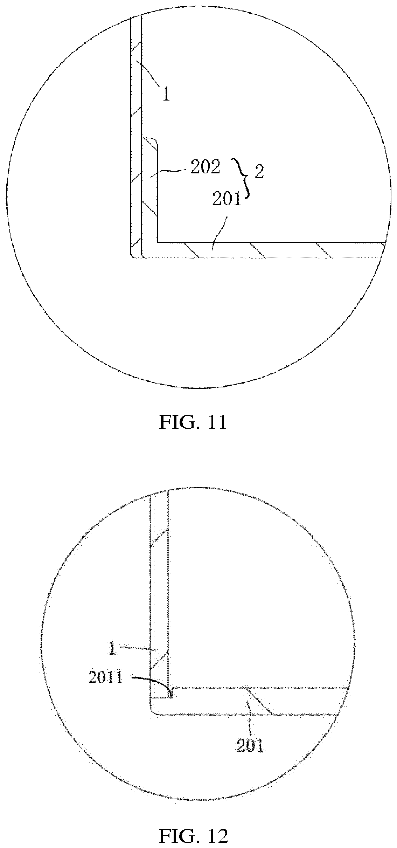

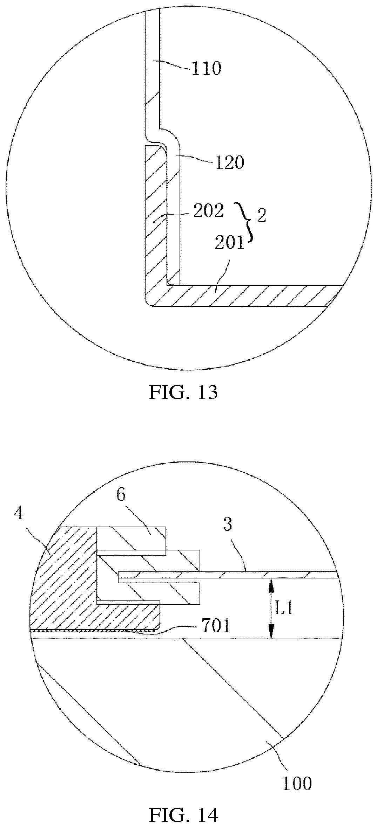

Referring to FIG. 11, in an embodiment, the housing bottom 2 includes a bottom plate 201, a surrounding wall 202 is formed by extending from an edge of the bottom plate 201 toward the housing 1, and an outer side wall of the surrounding wall 202 is connected to an inner side wall of the housing 1. In this manner, the outer surface of the housing 1 is essentially flush, or an inner side wall of the surrounding wall 202 is connected to an outer side wall of the housing 1. Referring to FIG. 13, in an embodiment, the housing 1 includes a first segment 110 and a second segment 120, a cross-sectional dimension of the second segment 120 is less than a cross-sectional dimension of the first segment 110, the inner side wall of surrounding wall 202 of the housing bottom 2 is connected to an outer side wall of the second segment 120 of the housing 1. In this embodiment, an outer surface of the first segment 110 and an outer surface of the surrounding wall 202 are clamped and are essentially flush, which might improve the appearance of the lithium battery. An overlapping structure is disposed at a position where the housing 1 and the housing bottom 2 are connected, which might improve the sealing property of the position where the housing 1 and the housing bottom 2 are connected, moreover, heat is generated during welding, the overlapping structure might enable the battery casing to absorb more welding heat. In this manner, the impact of the welding on the performance of the battery cell might be reduced.

In this embodiment, the housing bottom 2 is formed by stamping, a thickness of the housing bottom 2 is not less than a thickness of the sheet material of the housing 1, which might reduce the probability of stamping defects occurring in the housing bottom 2. A hardness of the sheet material of the housing 1 is greater than a hardness of the housing bottom 2. During using the lithium battery, the battery cell within the lithium battery tends to expand toward a side where a side area of the battery cell is greater, at this time, the housing 1 with a larger hardness might limit the battery cell and prevent bulging of the lithium battery.

In an embodiment, the sheet material from which the housing 1 is manufactured might be a thin plate such as a stainless steel plate, a pure nickel plate, and an aluminum alloy plate, or might be a material suitable for corrosion resistance and weight reduction needs, such as composite materials of aluminum-stainless steel and aluminum-iron-nickel.

Referring to FIG. 12, in an embodiment, the housing bottom 2 is provided with only the bottom plate 201, a peripheral portion of the bottom plate 201 is depressed to form a step surface 2011, and the step surface 2011 is connected to the housing 1. The step surface 2011 is disposed. In this manner, the step surface 2011 might be positioned with the housing 1 during assembly, the difficulty of subsequent welding operations of the step surface 2011 and the housing 1 might be reduced.

In an embodiment, the housing cover 3 is provided with a cover cap 4, the cover cap 4 is connected to a positive electrode tab of the battery cell of the lithium battery, and a negative electrode tab of the battery cell of the lithium battery is connected to the housing bottom 2.

In an embodiment, the cover cap 4 disposed on the housing cover 3 is connected to the housing cover 3 in an insulating manner by an insulating member 6, which prevents the short-circuit of the lithium battery.

In an embodiment, as shown in FIGS. 8 and 9, the housing cover 3 is provided with a liquid injection hole 301 and a blocking member 5, the blocking member 5 selectively seals and blocks the liquid injection hole 301. The liquid injection hole 301 is disposed, the electrolyte solution might be injected into the inside of the battery casing after the housing cover 3 and the housing bottom 2 are separately welded with the housing 1. In this manner, the sealing property of the welding position is ensured. When assembled, the battery casing might be filled with the electrolyte solution through the liquid injection hole 301. After the filling of the electrolyte solution is completed, a formation process is performed. After the formation is completed, the blocking member 5 is placed into the liquid injection hole 301, and the blocking member 5 and the housing cover 3 are welded and sealed by means of laser welding.

Referring to FIGS. 8 and 14, a distance between the housing cover 3 and the battery cell is L1, a length of a cell electrode tab 300 is L2, and L2 > L1. The length of the cell electrode tab 300 is disposed to be greater than the distance between the housing cover 3 and the battery cell, the cell electrode tab 300 and the cover cap 4 might be connected in various ways such as a laser welding, an ultrasonic welding, and a resistance welding, and the manufacturing cost of the lithium battery might be reduced.

Referring to FIGS. 8 to 10, the battery cell within the lithium battery includes a first cell body 100 and a second cell body 200, the first cell body 100 and the second cell body 200 are connected by a connecting piece 7. In this embodiment, a thickness of the first cell body 100 is greater than a thickness of the second cell body 200, and a first accommodation portion 104 and a second accommodation portion 105 are arranged within the housing 1, the first accommodation portion 104 communicates with the second accommodation portion 105, a thickness of the first accommodation portion 104 is greater than a thickness of the second accommodation portion 105, the first cell body 100 is located within the first accommodation portion 104, and the second cell body 200 is located within the second accommodation portion 105. In this embodiment, the first cell body 100 and the second cell body 200 are connected in parallel, of course, in other embodiments, the first cell body 100 and the second cell body 200 might be connected in series. When the housing 1 is machined, the sheet material might be bent for multiple times. In this manner, the cross section of the housing 1 is a combination of different shapes, and the lithium battery might adapt to different usage spaces, and at this time, the housing 1 has the first accommodation portion 104 and the second accommodation portion 105 respectively with different thicknesses, and the first cell body 100 and the second cell body 200 respectively having different thicknesses are correspondingly disposed within the first accommodation portion 104 and the second accommodation portion 105, which might improve the electrical energy storage capability of the lithium battery.

In this embodiment, the first accommodation portion 104 and the second accommodation portion 105 are arranged in a width direction of the housing. In other embodiments, the first accommodation portion 104 and the second accommodation portion 105 might be arranged in a thickness direction, a length direction, or other direction of the housing 1 according to actual needs.

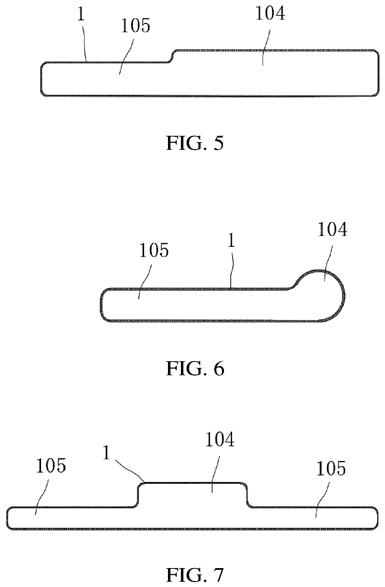

Referring to FIGS. 5 to 7, the cross section of the housing 1 might be a combination of multiple different shapes, and a third cell body, a fourth cell body, and so on might be disposed within the lithium battery according to the shape of the housing 1.

In an embodiment, the connecting piece 7 includes a positive electrode piece 701 and a negative electrode piece 702. A negative electrode tab of the first cell body 100 and a negative electrode tab of the second cell body 200 are connected through the negative electrode piece 702, and the negative electrode piece 702 is connected to the housing bottom 2. A positive electrode tab of the first cell body 100 and a positive electrode tab of the second cell body 200 are connected through the positive electrode piece 701, a length of the positive electrode piece 701 is greater than the distance between the battery cell and the housing cover 3, the positive electrode piece 701 is welded to the cover cap 4 of the housing cover 3, and after the positive electrode piece 701 is welded to the cover cap 4, the housing cover 3 and the housing 1 are assembled, positioned and welded.

## Claims

1. A battery casing, comprising:
a housing, wherein the housing is a tubular structure with two open ends and is configured to be formed by bending and welding of a sheet material, the sheet material has a first side edge and a second side edge which are welded, and the first side edge and the second side edge are provided with positioning structures;
a housing bottom, wherein the housing bottom is welded to a first end of the housing, and the housing bottom is configured to seal and block the first end of the housing; and
a housing cover, wherein the housing cover is welded to a second end of the housing, and the housing cover is configured to seal and block the second end of the housing facing away from the housing bottom.

2. The battery casing of claim 1, wherein the positioning mechanisms comprise a groove disposed on the first side edge and a protrusion disposed on the second side edge, a width of a groove bottom of the groove is greater than a width of a groove opening of the groove, a shape of the groove is adapted to a shape of the protrusion, and the protrusion is configured to be inserted into the groove when the first side edge and the second side edge are brought into contact.

3. The battery casing of claim 2, wherein a position where the first side edge and the second side edge are connected is located on a side surface of the housing; or
a position where the first side edge and the second side edge are connected is located at a corner position of the housing.

4. The battery casing of claim 1, wherein the positioning mechanisms comprise a through hole and a bump, the through hole is disposed on the sheet material and is adjacent to the first side edge, the bump is disposed on the sheet material and is adjacent to the second side edge, and the bump is configured to be inserted into the through hole, the first side edge is welded to an outer side wall of the sheet material, and the second side edge is welded to an inner side wall of the sheet material.

5. The battery casing of claim 1, wherein the housing bottom comprises a bottom plate, and a surrounding wall is formed by extending from an edge of the bottom plate toward the housing; and an outer side wall of the surrounding wall is connected to an inner side wall of the housing, or an inner side wall of the surrounding wall is connected to an outer side wall of the housing.

6. The battery casing of claim 1, wherein the housing comprises a first segment and a second segment, a cross-sectional dimension of the second segment is less than a cross-sectional dimension of the first segment, the housing bottom comprises a bottom plate, and a surrounding wall is formed by extending from an edge of the bottom plate toward the housing, and an inner side wall of the surrounding wall is connected to an outer side wall of the second segment.

7. The battery casing of claim 1, wherein the housing comprises a bottom plate, and a peripheral portion of the bottom plate is depressed to form a step surface, and the step surface is connected to the housing.

8. The battery casing of claim 1, wherein at least a first accommodation portion and a second accommodation portion are arranged within the housing, the first accommodation portion communicates with the second accommodation portion, and a thickness of the first accommodation portion is greater than a thickness of the second accommodation portion.

9. The battery casing of claim 1, wherein the battery casing is designed by using at least one of following arrangement manners:
a thickness of the housing bottom being not less than a thickness of the sheet material of the housing; and
a hardness of the sheet material of the housing being greater than a hardness of the housing bottom.

10. A lithium battery, comprising a battery cell, wherein the battery cell comprises the battery casing of any one of claims 1 to 9, and the battery cell is located within the housing of the battery casing.

11. The lithium battery of claim 10, wherein a distance between the housing cover and the battery cell is L1, a length of a cell electrode tab is L2, and L2 > L1.

12. The lithium battery of claim 10, wherein the battery cell comprises at least a first cell body and a second cell body, the first cell body and the second cell body are connected by a connecting piece, a thickness of the first cell body is greater than a thickness of the second cell body, and a first accommodation portion and a second accommodation portion are disposed within the housing, a thickness of the first accommodation portion is greater than a thickness of the second accommodation portion, the first cell body is located within the first accommodation portion, and the second cell body is located within the second accommodation portion.
